# EUROPEAN PATENT SPECIFICATION

(11) **EP 0 566 520 B1**
(45) Date of publication and mention of the grant of the patent: **16.07.1997**
(21) Application number: 93610004.9
(22) Date of filing: 21.01.1993
(51) Int. Cl.: A01J 25/15

(54) **A cheese press and a cheese mould battery for use therein**
Käsepresse und Käseformeneinheit hierfür
Presse à fromages et batterie de moules à fromages pour utilisation dans cette presse

(30) Priority: 21.01.1992 DK 72/92
(43) Date of publication of application: 20.10.1993
(73) Proprietor: APV Cheese AS, 8653 Them (DK)
(72) Inventor: Gasbjerg, Knud, 8600 Silkeborg (DK)
(74) Representative: Skoett-Jensen, Knud

(56) References cited:
- EP-A- 0 439 228
- DE-A- 3 002 355
- FR-A- 1 032 925
- FR-A- 2 647 634
- US-A- 4 817 515

## Description

The present invention relates to a cheese press of the type disclosed in US-A-4,817,515, i.e. a tubular press operable to receive a single or just a few rows of cheese moulds or mould batteries and having at its top a longitudinally extending pressing body, which can be pumped up or inflated so as to expand downwardly and thus exert a desired pressing force on pressing lids this type are highly advantageous over more conventional cheese presses, inter alia by forming an entirely closed structure about the cheeses or cheese moulds being pressed, while also the mechanical construction of these pressed, while also the mechanical construction of these presses is relatively very simple, as they can be made of sheet metal for the greater part, preferably of stainless steel.

While the pressure exerting means have traditionally been working cylinders arranged above the cheese moulds, the presses of the said known type are greatly simplified by making use of an inflatable hose member extending along the ridge of the press tube and thus by its inflation pressing downwardly against the mould lids.

"It should be mentioned that EP-0,439,228 discloses a cheese press having an upper, flat presser head with downwardly projecting members for contacting the respective cheese moulds in response to the presser head being lowered and forced against the moulds by external force exerting means such as hydraulic cylinders. The presser head is made as a flat, hollow structure, the lower side of which is provided with a multitude of holes, in which the said downwardly protruding members are slidably mounted. The top head portions of these members are covered by a resilient diaphragm which, when air pressure is applied to the interior of the flat presser head, holds down the protruding members or plungers with a certain force. It is obtained thereby that the plungers, when collectively lowered against the moulds, may adjust themselves with respect to small height differences between the effective top sides of the moulds, in being forced individually upwardly against the said internal pressure.

The press according to the invention is very much simpler in not having neither the said plungers nor any separately movable presser head, inasfar as the diaphragm alone is sufficient to exert the required pressing force, even against moulds of widely different heights".

In connection with the present invention it has been recognized that this arrangement may be further improved, viz. in that instead of the said inflatable hose use can be made of a resilient diaphragm, which, along its side edges, is tightly clamped between respective flange portions of a lower, mould accommodating part of the press tube and an upper part thereof upstanding or upwardly arched therefrom, the upper tube space hereby being formed above the diaphragm being provided with a connection to a source of compressed air and vacuum, respectively, while the tube space underneath the diaphragm is provided with means for its connection with a CIP cleaning system.

It is achieved hereby that the diaphragm, taking over the function of the known pressing hose in an advantageous manner, will provide for a total separation between the upper and the lower part of the press tube, such that the partial space accommodating the cheese moulds can be minimized; thus, the remaining space above the diaphragm will not need to be CIP-cleaned. Another important advantage is that the resilient diaphragm, when subjected to compressed air in the upper tube space, can seek downwardly almost over the entire width of the press tube, whereby it will be possible to place cheese moulds or mould parts very close to the side walls of the press tube, such that generally an increased capacity thereof will be achievable.

Moreover, an improved distribution of the pressure on the rigid top part of the press will be achieved, because the pressure will be evenly distributed and not concentrated along the middle portion of the top part. Also, it will be easier to effect co-pressing of cheeses of different heights, and the mould lids may be simplified, because they, themselves, should now to a smaller degree effect a distribution of the pressing force.

In the following the invention is explained in more detail with reference to the drawing, in which
Fig. 1 is a perspective view of a press tube according to the invention,
Fig. 2,a-c, show some mould batteries for use in this press tube, and
Fig. 3 is a sectional view of the press, when in operation.

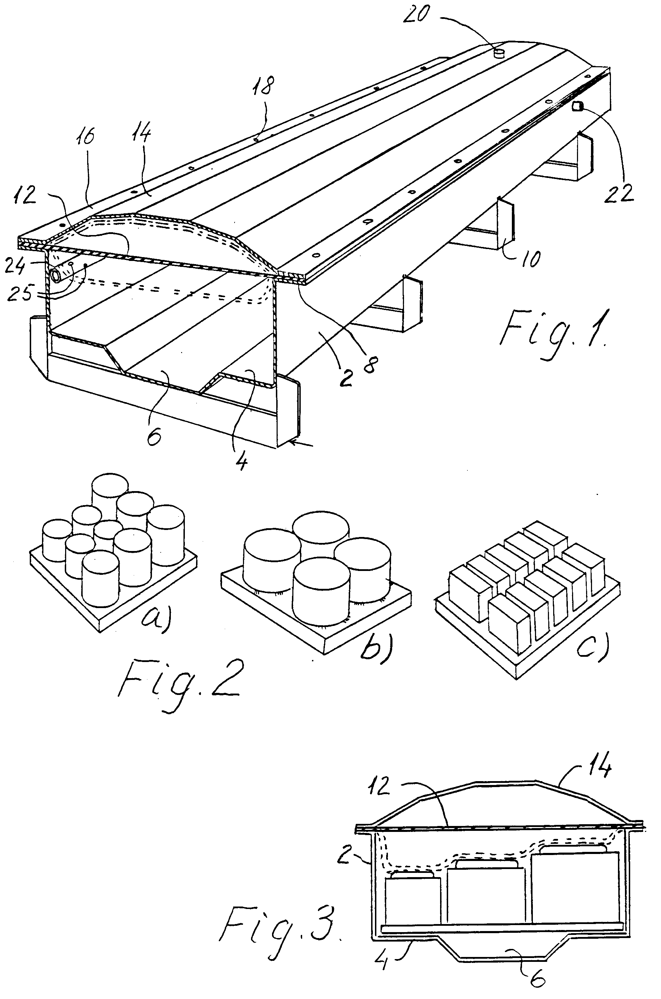

The press tube shown in Fig. 1 is made of profile bent stainless steel plate and comprises a lower part 2 having a bottom portion 4 provided with a groove shaped depression 6 and having upper, outwardly projecting edge flanges 8. This lower part 2 is provided with a row of transverse carrier elements 10, whereby it can be rigidly supported on a suitable carrier surface.

On the top side of the upper flanges 8 is placed a rubber resilient diaphragm 12, over which there is mounted an upper tube part 14 joined to the edges of the diaphragm 12 by means of edge flanges 16 connected with the flanges 8 by means of bolts 18 or otherwise, so as to sealingly clamp the edges of the diaphragm between the flanges 8 and 16. The upper tube part 14 is shaped with a domed profile between the side edges, and in an upper wall portion thereof there is provided a connector stub 20 for connection with a non-illustrated source of compressed air and vacuum.

The lower tube part 2 is provided with a wall stub 22, which is connectable with a source of CIP cleaning liquid, for introduction of such liquid in the lower tube part. An associated drainage of the cleaning liquid may take place through the same drainage means as used for removal of whey during the cheese pressing operation, where the whey is collected in the bottom groove 6. Typically, an associated outlet stub, not shown, will be mounted at one end of the press tube, the tube being arranged so as to be slightly inclined towards this outlet end. The stub 22 or more such stubs are connected with interior, longitudinally extending flush pipes 24 for cleaning liquid and water. The pipes 24 may have perforations 25.

The cheese moulds are introduced onto the tube bottom through an open end of the tube which may thereafter be closed. When compressed air is applied to the stub 20 the diaphragm 12 will be urged downwardly, as shown in dotted lines, and hereby it can exert the desired pressing force against the pressing lids placed in the moulds. It will be appreciated that the diaphragm may be effective practically all over the width of the tube 2, i.e. it may cooperate also with moulds that are placed rather close to the sides. If the moulds are relatively high, the introduction can be facilitated by connecting the stub 20 to a vacuum source, whereby the diaphragm 12 can be sucked up to the underside of the upper tube part 14, as shown in dot-and-dash lines.

After the pressing the moulds are taken out for being demoulded, whereafter the tube 2 is closed and is cleaned by means of CIP liquid supplied through the stub 22.

It should be mentioned that in a preferred embodiment the flush pipe or pipes 24 are arranged in an axially reciprocal manner, preferably associated or even integrated with a reciprocal conveyor system provided in the bottom groove 6. In this manner, all surface parts of the press chamber may be effectively cleaned without the perforations 25 having to be located with any particularly small spacing, and a vivid flushing can be effected with only a moderate flow of CIP liquid.

The outwardly projecting flanges 8 and 16 have a pronounced reinforcing effect on the press tube, and they enable the tube parts to be separated, should this be desirable for some kind of repair work.

The press disclosed can work with that kind of moulds or mould batteries which have already been used in connection with presses of the discussed type, but in Fig. 2 it is shown that also modified mould batteries can be used, made with a relatively heavy bottom plate that will make it possible to use a rather broad groove 6 in the tube bottom 4. Fig. 2a and 2b show round moulds, while Fig. 2c show rectangular moulds. The moulds or mould skirts may be permanently secured to the base plates, e.g. for plastic moulds by gluing and for metallic moulds by bolting or welding. As mentioned above it is very well possible to make use of moulds placed near the side edges of the base plates.

In Fig. 2a as well as in Fig. 3 it is shown that the moulds need not be of identical heights, as the diaphragm 12 will be readily self-shaping to cooperate will all the moulds anyway, even those placed near the sides of the press tube.

## Claims

1. A cheese press of the kind having a tubular press housing (2) operable to receive a single or just a few rows of cheese moulds or mould batteries and having at its top a longitudinally extending, resilient pressing body, which can be pumped up or inflated for exerting a downwardly directed pressing force, characterized in that the pressing body is constituted by a rubber resilient diaphragm (12), which, along its side edges, is tightly clamped between respective edges of a lower, mould accommodating part (2) of the press tube and an upper part (14) thereof, which is upstanding or cross-sectionally upwardly arched from the lower part, thus forming an upper tube chamber (12,14) above the diaphragm, this chamber being connectable with a source of pressurized fluid or vacuum (20), respectively, while the lower tube chamber underneath the diaphragm (12) is connectable with a CIP cleaning system (22).

2. A cheese press according to claim 1, in which the press tube (2) is made of metal sheet, characterized in that the diaphragm (12) is clamped between outwardly projecting edge flanges (8) of the two tube parts (2,14).

3. A cheese press according to claim 1, characterized in that in the lower tube chamber (2) there is arranged one or more flush pipes (24) for flushing CIP liquid against the walls of the chamber through pipe wall perforations (25), this or these pipes (24) being arranged so as to be longitudinally reciprocally movable, optionally in being associated with or integrated in a reciprocally arranged conveyor system located in a longitudinal bottom groove (6) of the lower tube part.

4. A cheese press according to claim 1, comprising an associated mould battery having base plate and mould parts placed thereon, characterized in that the base plate has a width widely corresponding to the width of the bottom of the press tube (2), and that on the base plate some mould parts are placed immediately next to the side edges thereof, said mould parts preferably being permanently secured to the base plate.

5. A cheese press according to claim 4, characterized in that the mould battery is designed so as to have a stiff base plate suited for bridging, in a self-carrying manner, over a wide groove (6) in the bottom of the lower tube part (2).

## Patentansprüche

1. Eine Käsepresse von der Art, die ein rohrförmiges Pressengehäuse (2) aufweist, das bedienbar ist, um eine einzige oder nur wenige Reihen Käseformen oder Sätze von Formen aufzunehmen und dies oben einen sich in Längsrichtung erstreckenden elastischen Preßkörper aufweist, der aufgepumpt oder aufgeblasen werden kann, um eine nach unten gerichtete Preßkraft auszuüben, dadurch gekennzeichnet, daß der Preßkörper aus einer gummielastischen Membran (12) gebildet ist, die entlang ihrer Seitenränder fest zwischen den jeweiligen Rändern eines unteren Formaufnahmeteils (2) der Pressenröhre und eines oberen Teils (14) davon eingespannt ist, der von dem unteren Zeil aufgerichtet oder im Querschnitt nach oben gerichtet gebogen ist, wodurch er einen oberen Röhrenraum (12, 14) über der Membran ausbildet, wobei dieser Raum mit einer Quelle von sich unter Druck befindlichem Fluid bzw. eines Unterdrucks verbindbar ist, während der untere Röhrenraum unter der Membran (12) mit einem CIP-Reinigungssystem (22) verbindbar ist.

2. Eine Käsepresse nach Anspruch 1, wobei die Pressenröhre (2) aus Metallfolie gebildet ist, dadurch gekennzeichnet, daß die Membran (12) zwischen nach außen vorstehenden Seitenflanschen (8) der beiden Röhrenteile (2, 14) eingespannt ist.

3. Eine Käsepresse nach Anspruch 1, dadurch gekennzeichnet, daß in dem unteren Röhrenraum (2) ein oder mehrere Spülrohr(e) (24) zum Spülen von CIP-Flüssigkeit gegen die Wandungen des Raums durch Rohrwandperforationen (25) angeordnet ist/sind, wobei dieses Rohr (24) bzw. diese Rohre (24) so angeordnet ist/sind, daß sie in Längsrichtung hin und her bewegbar sind, wahlweise dadurch, daß sie mit einem hin und hergehend, angeordneten Fördersystem, das in einer Bodenrille (6) in Längsrichtung des unteren Röhrenteils verbunden bzw. in ein solches integriert sind.

4. Eine Käsepresse nach Anspruch 1, umfassend einen zugehörigen Satz Formen mit einer Grundplatte und darauf angeordneten Formteilen, dadurch gekennzeichnet, daß die Grundplatte eine Breite aufweist, die im wesentlichen der Breite des Bodens der Pressenröhre (2) entspricht, und daß auf der Grundplatte einige Formteile direkt neben deren Seitenrändern angeordnet sind, wobei die Formteile vorzugsweise dauerhaft mit der Grundplatte verbunden sind.

5. Eine Käsepresse nach Anspruch 4, dadurch gekennzeichnet, daß der Satz Formen so ausgebildet ist, daß er eine steife Grundplatte aufweist, die in einer selbsttragenden Weise zum Überbrücken einer breiten Rille (6) im Boden des unteren Röhrenteils (2) ausgebildet ist.

## Revendications

1. Presse à fromage du type ayant un carter de presse tubulaire (2) susceptible de fonctionner pour recevoir une unique ou juste quelques rangées de moules à fromage ou séries de moules, et présentant, à son dessus, un corps de pressage élastique s'étendant longitudinalement, qui peut être gonflé pour exercer une force de pressage dirigée vers le bas,
caractérisée en ce que le corps de pressage est constitué par un diaphragme élastique (12) en caoutchouc qui, le long de ses bords latéraux, est serré fermement entre des bords respectifs d'une partie inférieure (2) du tube de presse, logeant le moule, et d'une partie supérieure (14) de celui-ci, qui est droite ou arquée vers le haut en coupe transversale à partir de la partie inférieure, formant ainsi une chambre de tube supérieure (12,14) au-dessus du diaphragme, cette chambre étant susceptible d'être reliée à une source de fluide sous pression ou de vide (20), respectivement, tandis que la chambre de tube inférieure au-dessous du diaphragme (12) est susceptible d'être reliée à un système de nettoyage CIP (22).

2. Presse à fromage selon la revendication 1, dans laquelle le tube de presse (2) est réalisé en tôle,
caractérisée en ce que le diaphragme (12) est serré entre des rebords (8) faisant saillie vers l'extérieur des deux parties de tube (2,14).

3. Presse à fromage selon la revendication 1,
caractérisée en ce que dans la chambre inférieure (2) du tube est/sont agencés un ou plusieurs tuyaux de rinçage (24) pour rincer par du liquide CIP, les parois de la chambre à travers des perforations (25) de paroi de tube, ce ou ces tuyaux (24) étant agencés de façon à être mobiles longitudinalement, alternativement, éventuellement en étant associés à ou intégrés dans un système à convoyeur agencé en va-et-vient, situé dans une rainure longitudinale de fond (6) de la partie de tube inférieure.

4. Presse à fromage selon la revendication 1, comprenant une série de moules associés ayant un plaque de base et des parties de moule sur celle-ci,
caractérisée en ce que la plaque de base présente une largeur correspondant largement à la largeur du fond du tube de presse (2) et en ce que, sur la plaque de base, certaines parties de moule sont placées immédiatement près des bords latéraux de celle-ci, lesdites parties de moule étant de préférence fixées de façon permanente à la plaque de base.

5. Presse à fromage selon la revendication 4,
caractérisée en ce que la série de moules est conçue de façon à avoir une plaque de base rigide appropriée pour la liaison, d'une manière auto-portante, sur une large rainure (6) dans le fond de la partie de tube inférieure (2).
